# FASCICULE DE BREVET EUROPEEN

(11) **EP 0 807 214 B1**
(45) Date de publication et mention de la délivrance du brevet: **03.05.2000**
(21) Numéro de dépôt: 96901413.3
(22) Date de dépôt: 18.01.1996
(51) Int. Cl.: F16D 13/52, F16D 13/64, F16D 25/0638

(54) **DISPOSITIF D'ACCOUPLEMENT MULTI-DISQUES, TRANSMISSION AUTOMATIQUE AINSI EQUIPEE ET PROCEDE DE REALISATION**
LAMELLENKUPPLUNG, AUTOMATISCHES GETRIEBE MIT EINER SOLCHEN KUPPLUNG UND VERFAHREN ZUR HERSTELLUNG
MULTIPLE-DISC COUPLING DEVICE, AUTOMATIC TRANSMISSION PROVIDED THEREWITH, AND METHOD FOR MAKING SAME

(30) Priorité: 23.01.1995 FR 9500723
(43) Date de publication de la demande: 19.11.1997
(73) Titulaire: ANTONOV AUTOMOTIVE TECHNOLOGIES B.V., 3013 AL Rotterdam (NL)
(72) Inventeur: Antonov, Roumen, F-75008 Paris (FR)
(74) Mandataire: Pontet, Bernard
(86) Numéro de dépôt international: FR9600083
(87) Numéro de publication internationale: WO9623144

(56) Documents cités:
- EP-A- 0 619 444
- WO-A-91/14878
- FR-A- 2 490 756
- FR-A- 2 623 862
- US-A- 2 935 169
- US-A- 4 564 994
- US-A- 4 828 089
- US-A- 5 048 654

## Description

La présente invention concerne un dispositif d'accouplement multi-disques à friction, en particulier un embrayage ou un frein, du type utilisable par exemple dans les transmissions automatiques pour automobile en vue d'accoupler sélectivement deux organes rotatifs de la transmission et piloter ainsi le rapport de transmission entre l'entrée et la sortie de la transmission.

La présente invention concerne également une transmission automatique ainsi équipée.

La présente invention concerne également un procédé pour réaliser un disque du dispositif d'accouplement multi-disques.

Les transmission automatiques utilisent couramment, pour piloter le rapport de transmission qu'elles fournissent, des embrayages multi-disques comprenant une alternance de disques reliés à l'un et respectivement à l'autre de deux organes rotatifs qui doivent être sélectivement accouplés et désaccouplés. Le coefficient de frottement du matériau utilisé pour les disques ainsi que le nombre de disques et leur diamètre influent sur la force axiale de serrage qu'il sera nécessaire d'appliquer à l'embrayage pour que celui-ci soit capable de transmettre à l'un des organes rotatifs le couple reçu de l'autre. Ces embrayages travaillent dans un bain d'huile ayant une fonction de refroidissement, de réduction de l'usure, et d'élimination de tout frottement résiduel même si le jeu entre les disques est très faible lorsque l'embrayage est à l'état desserré. Habituellement, les disques sont en acier trempé et leur épaisseur est choisie aussi faible que raisonnablement possible. On cherche en effet à réduire l'encombrement axial de l'embrayage multi-disques.

En pratique, ces embrayages n'ont pas toujours les qualités qu'on attend d'eux. En particulier, le passage de l'état accouplé à l'état désaccouplé est parfois brutal. En outre, l'embrayage est sujet à des phénomènes d'usure et par conséquent à une détérioration de ses qualités de fonctionnement au cours du temps.

Ces défauts prennent une importance particulière dans le cas de certains types de transmission automatique, tels que décrits dans le WO-A-92 07 206, dans lesquelles les caractéristiques de frottement entre les disques sont l'un des éléments qui déterminent les points de passage d'un rapport à l'autre dans la transmission. On appelle "point de passage" chaque paire de valeurs, vitesse de rotation/couple à transmettre, pour laquelle la transmission passe automatiquement d'un rapport à l'autre. Il y a une infinité de points de passage possibles puisque pour chaque couple à transmettre correspond une vitesse de rotation pour laquelle le changement de rapport considéré va s'effectuer.

Dans les transmissions selon le WO-A-92 07 206, le passage d'un rapport de transmission donné à un rapport de transmission inférieur s'effectue lorsque l'embrayage, soumis à une force de serrage calibrée, n'est plus capable de transmettre le couple et se met donc à patiner. Si le coefficient de frottement est incertain, le point de passage pour un tel changement de rapport sera lui-même incertain.

Le passage d'un rapport à un rapport supérieur, résulte d'un processus différent, selon lequel la force de serrage calibrée surmonte progressivement une force contraire engendrée par une réaction de denture. En même temps, le passage d'une partie croissante de la puissance à travers l'embrayage fait progressivement disparaître cette réaction de denture. Ceci permet finalement à la force de serrage d'acquérir une suprématie totale. Ce processus nécessite une grande qualité de la relation de friction entre les disques si l'on veut éviter les à-coups.

De tels processus de changement de rapport entraînent, entre les disques, des phases de friction sous charge plus prolongées que dans le cas des transmissions automatiques tout à fait classiques où les embrayages et les freins sont actionnés par des vérins eux-mêmes pilotés par des circuits de commande logique.

Il a été relevé selon l'invention que le coefficient de frottement entre disques en acier variait avec la température et que ces variations étaient à l'origine de la plupart des défauts de fonctionnement constatés. Par exemple, pendant un processus de serrage progressif de l'embrayage, la température des disques augmente en raison du frottement croissant. En conséquence, le coefficient de frottement augmente. Ceci tend à provoquer un blocage trop rapide de l'embrayage, qu'il soit commandé par vérin ou conformément au WO-A-92 07 206.

Dans une transmission selon le WO-A-92 07 206, le point de passage à un rapport inférieur est directement fonction du coefficient de frottement entre les disques. Par conséquent le point de passage n'est pas le même lorsque la transmission fonctionne à température relativement basse ou au contraire à température relativement élevée, ou encore et surtout juste après l'échauffement ayant résulté d'un récent changement de rapport dans le sens opposé.

On connaît d'après le US-A-4 828 089 un dispositif d'accouplement à friction utilisant des disques à armature métallique. Au moins un disque sur deux porte des garnitures en carbone fortement rainuré pour permettre une circulation intense d'un liquide de refroidissement et de lubrification. En effet, la liaison entre le carbone et l'armature métallique ne résiste pas aux températures élevées. Un tel appareil est coûteux à réaliser, complexe à mettre en oeuvre, et peu performant.

Le WO-A-91/14 878 décrit un accouplement dont tous les disques sont en carbone massif. Ceci est coûteux. Comme les disques en carbone sont axialement plus épais que des disques en acier, l'encombrement axial est élevé.

Le but de la présente invention est de remédier aux inconvénients précités en proposant un embrayage multi-disques qui soit peu sensible à l'usure et aux variations de température tout en étant relativement économique.

Suivant l'invention, le dispositif d'accouplement multi-disques à friction, notamment pour transmission automatique destinée à l'automobile, comprenant un premier et un second organe coaxialement rotatifs, un premier groupe de disques réalisés en métal, solidaires en rotation du premier organe et alternant avec des disques d'un second groupe, solidaires en rotation du second organe, et des moyens pour sélectivement comprimer axialement et respectivement relâcher axialement les disques, est caractérisé en ce que pour chaque disque du second groupe, le corps du disque, comportant les deux faces de friction opposées, est réalisé en même masse de matière carbonée.

Il a été constaté que le contact métal/carbone donnait lieu à un coefficient de frottement largement indifférent à la température des disques. En outre, le frottement sous charge métal contre carbone n'engendre qu'une usure insignifiante, même s'il est peu ou pas lubrifié et si la température atteint localement des valeurs très élevées à certains stades du fonctionnement.

Suivant un second aspect de l'invention, la transmission automatique comprenant au moins une combinaison de dentures et au moins un dispositif d'accouplement multi-disques à friction piloté automatiquement entre l'état serré et l'état desserré pour faire fonctionner la combinaison de dentures selon un premier et respectivement un deuxième rapport de transmission est caractérisée en ce que le dispositif d'accouplement multi-disques est conforme au premier aspect.

De préférence, le dispositif d'accouplement par friction est un embrayage, la combinaison de dentures est au moins partiellement déchargée lorsque l'embrayage est serré, et la transmission comprend des moyens pour transmettre à l'embrayage, dans le sens du desserrage, une réaction de denture générée dans la combinaison de dentures quand elle est sous charge, des moyens pour serrer l'embrayage sous un effort calibré donnant à l'embrayage une capacité de transmission de couple correspondante, et un moyen du type roue libre pour empêcher la rotation inverse d'un organe de réaction supportant l'une des dentures de la combinaison.

De préférence, le carbone des disques du second groupe est renforcé de fibres, en particulier de fibres de carbone, selon la technologie dite "carbone-carbone".

Notamment dans la zone comprise entre les deux faces de friction du disque, les disques du second groupe peuvent ne comporter aucune armature, notamment aucune armature métallique. De cette façon, les disques sont moins coûteux à fabriquer, et leur épaisseur peut être ramenée à par exemple 3mm, l'épaisseur des disques en acier étant de préférence d'environ 1mm.

Suivant un troisième aspect de l'invention, le procédé pour réaliser un disque du second groupe d'un dispositif d'accouplement par friction selon l'invention est caractérisé en ce qu'on découpe le disque d'une seule pièce dans une plaque de matériau carboné ayant comme épaisseur sensiblement l'épaisseur souhaitée pour le disque du deuxième groupe.

La structure sans armature des disques en carbone permet d'utiliser ce procédé de fabrication très simple et très fiable. Lors du découpage dans la plaque, on peut simultanément former, par un contour de découpage correspondant, une denture le long d'un des deux bords annulaires du disque. Cette denture est destinée à s'engager dans des cannelures correspondantes de l'organe rotatif associé aux disques en carbone dans l'embrayage.

D'autres particularités et avantages de l'invention ressortiront encore de la description ci-après, relative à des exemples non-limitatifs.

Aux dessins annexés :
- la figure 1 est une demi-vue en coupe longitudinale schématique partielle d'une transmission à au moins deux rapports selon l'invention, au repos, équipée d'un embrayage multi-disques selon l'invention ;
- la figure 2 est une vue partielle de l'embrayage multi-disques de la transmission de la figure 1, en coupe transversale ;
- les figures 3 et 4 sont des vues analogues à la figure 1, mais simplifiées et relatives au fonctionnement en réducteur, et respectivement en prise directe ;
- la figure 5 est une vue partielle en coupe et perspective de trois disques de l'embrayage de la transmission des figures 1 à 4 ; et
- la figure 6 est une vue schématique en perspective illustrant le procédé de fabrication d'un disque en carbone.

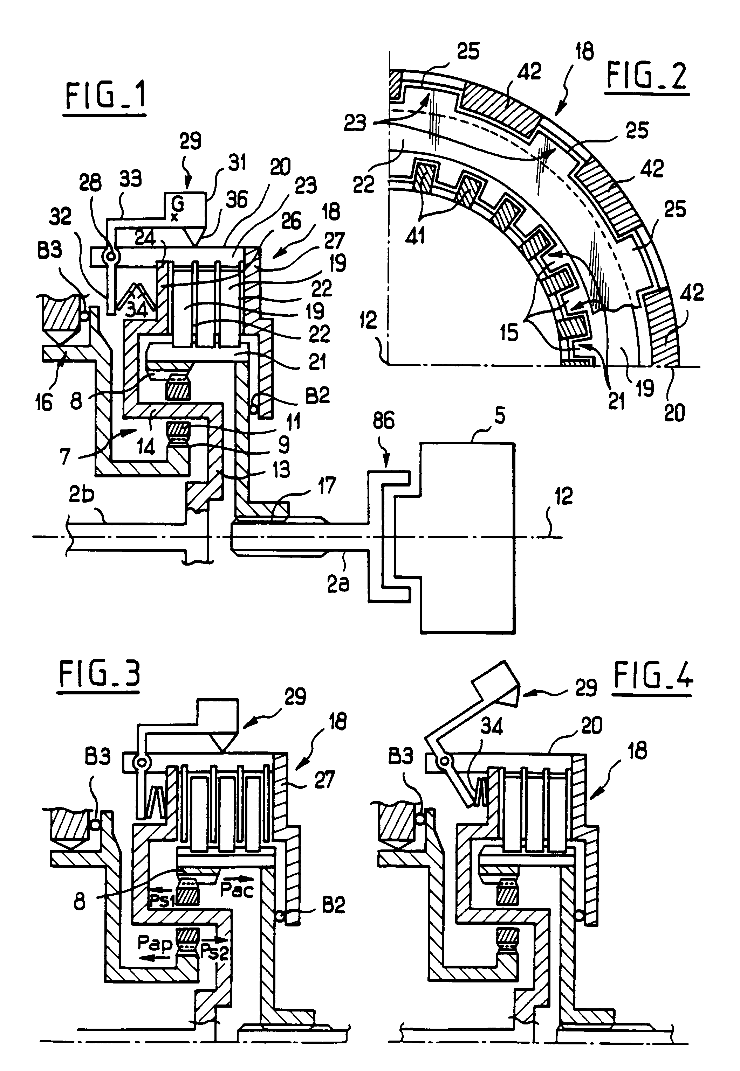

La transmission représentée à la figure 1, destinée en particulier à une automobile, comprend un dispositif de transmission à deux rapports ayant un arbre d'entrée 2a et un arbre de sortie 2b alignés selon l'axe 12 de la transmission. L'arbre d'entrée 2a est relié à l'arbre de sortie d'un moteur 5 de véhicule automobile avec interposition d'un embrayage d'entrée 86. L'arbre de sortie 2c est destiné à entraîner directement ou indirectement l'entrée d'un différentiel pour l'entraînement des roues motrices d'un véhicule. Entre l'arbre de sortie 2b et l'entrée du différentiel peut par exemple être interposé un autre dispositif de transmission à deux ou plusieurs rapports et/ou un inverseur marche avant - marche arrière à commande manuelle.

Les arbres d'entrée 2a et de sortie 2b sont immobilisés axialement relativement à un carter 4 (partiellement représenté) de la transmission.

Le dispositif de transmission comprend un engrenage différentiel formé par un train épicycloïdal 7. Le train 7 comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par un porte-satellites 13 relié rigidement à l'arbre de sortie 2b. Les satellites 11 peuvent tourillonner librement autour de tourillons excentrés 14 du porte-satellites 13. La roue planétaire 9 peut tourner librement autour de l'axe 12 du dispositif de transmission par rapport à l'arbre de sortie 2b qu'elle entoure. Toutefois, un dispositif de roue libre 16 empêche la roue planétaire 9 de tourner en inverse, c'est à dire en sens inverse du sens normal de rotation de l'arbre d'entrée 2a, par rapport au carter 4 de la transmission.

La couronne 8 est liée en rotation, mais libre en coulissement axial, relativement à l'arbre d'entrée 2a, par l'intermédiaire de cannelures 17.

Un embrayage multi-disques 18 est disposé autour de la couronne 8. Il comprend un empilement de disques annulaires 19 alternant avec des disques annulaires 22. Les disques 19 sont liés en rotation à la couronne 8 avec possibilité de coulissement axial. Pour cela, les disques 19 ont des dents intérieures 15 (figure 2) engagées dans des cannelures 21 solidaires de la couronne 8. Les disques 22 sont liés en rotation, avec possibilité de coulissement axial, au porte-satellites 13. Pour cela, une cage 20 comporte, sur sa face radialement intérieure, des cannelures 23 dans lesquelles sont engagées de façon axialement coulissante d'une part des dents extérieures 25 des disques 22 et d'autre part des dents extérieures 24 du porte-satellites 13 (figure 1).

Les cannelures 21, 23 sont constituées par des fentes ouvertes entre des lamelles 41, 42 qui permettent à l'huile d'entrer et de sortir de l'espace annulaire occupé par les disques 19, 22. Au besoin, des moyens spécifiques peuvent être prévus pour alimenter en huile l'espace situé radialement à l'intérieur des cannelures 21.

L'empilement de disques 19 et 22 peut être serré axialement entre un plateau de retenue 26 solidaire du porte-satellites 13 et un plateau mobile 27 qui appartient à la cage 20.

La cage 20 supporte des masselottes centrifuges 29 disposées en couronne autour de l'embrayage 18.

Les masselottes sont donc liées en rotation à l'arbre de sortie 2b du dispositif de transmission.

Chaque masselotte a un corps massif 31 situé radialement à l'extérieur des disques 19 et 22 et un bec d'actionnement 32 appuyé contre une face extérieure du plateau fixe 26 par l'intermédiaire d'un ressort belleville 34. Le bec 32 est relié au corps massif 31 par un bras coudé 33 articulé à la cage 20 autour d'un axe 28 orienté tangentiellement par rapport à l'axe 12 du dispositif. Le WO-A-91/13275 décrit des dispositions avantageuses pour le montage articulé de telles masselottes. Le centre de gravité G de la masselotte est situé à l'intérieur ou au voisinage du corps massif 31, en une position qui présente par rapport à l'axe 28 un certain écartement mesuré parallèlement à l'axe 12 du dispositif.

Ainsi, la rotation du porte-satellites 13 tend à faire pivoter radialement vers l'extérieur les corps 31 des masselottes 29 autour de leur axe tangentiel 28 sous l'action de leur force centrifuge Fa, pour les faire passer d'une position de repos définie par une butée 36 contre la cage 20 (figures 1 et 3) à une position écartée visible à la figure 4.

Il en résulte alors un déplacement axial relatif entre le bec 32 et l'axe d'articulation 28 de la masselotte, donc entre le bec 32 et la cage 20. Relativement au sens de déplacement correspondant à l'écartement centrifuge des masselottes 29, la cage 20 est appuyée axialement contre la couronne 8, avec liberté de rotation relative, par une butée axiale B2.

Ainsi, le déplacement de la cage 20 par rapport au bec 32 provoque un mouvement de rapprochement relatif entre le bec 32 et le plateau mobile 27 de l'embrayage 18. Ce déplacement relatif peut correspondre à une compression du ressort belleville 34 et/ou à un déplacement du plateau mobile 27 vers le plateau fixe 26 dans le sens du serrage de l'embrayage 18.

Lorsque le dispositif de transmission est au repos comme représenté à la figure 1, le ressort belleville 34 transmet à la cage 20, par l'intermédiaire des masselottes 29 en butée au repos, une force qui serre l'embrayage 18 de sorte que l'entrée 2a du dispositif de transmission est couplée en rotation avec la sortie 2b et le dispositif de transmission constitue une prise directe capable de transmettre du couple jusqu'à un certain maximum défini par la force de serrage du ressort belleville.

D'autre part, les dentures de la couronne 8, des satellites 11 et de la roue planétaire 9 sont de type hélicoïdal. Ainsi, dans chaque couple de dentures engrenant sous charge, il apparaît des poussées axiales opposées proportionnelles à la force circonférentielle transmise, donc au couple sur l'arbre d'entrée 2a et au couple sur l'arbre de sortie 2b. Le sens d'inclinaison hélicoïdale des dentures est choisi pour que la poussée axiale Pac (figure 2) prenant naissance dans la couronne 8 lorsqu'elle transmet un couple moteur s'exerce dans le sens où la couronne 8 pousse le plateau mobile 27, par l'intermédiaire de la butée B2. Ainsi, lorsque la poussée axiale Pac existe, la couronne 8 pousse le plateau 27 dans le sens l'écartant du plateau de retenue 26 de l'embrayage 18. Les satellites 11, qui engrènent non seulement avec la couronne 8 mais aussi avec la roue planétaire 9, subissent deux réactions axiales opposées PS1 et PS2, qui s'équilibrent, et la roue planétaire 9 subit, compte-tenu de son engrènement avec les satellites 11, une poussée axiale Pap qui est égale en intensité et opposée à la poussée axiale Pac de la couronne 8. La poussée Pap de la roue planétaire 9 est transmise au carter 4 par l'intermédiaire d'une butée B3. Ainsi, la poussée axiale Pac s'exerce sur le plateau mobile 27 de l'embrayage et par rapport au carter 4, donc par rapport au plateau de retenue 26 de l'embrayage, et ceci dans le sens tendant à desserrer l'embrayage 18. Cette force, transmise par la butée B2 à la cage 20, tend aussi à rapprocher l'un de l'autre le bec 32 des masselottes 29 et le plateau de retenue 26, donc à maintenir les masselottes 29 dans leur position de repos et à comprimer le ressort belleville 34.

C'est la situation représentée à la figure 3. En supposant cette situation réalisée, on va maintenant décrire le fonctionnement de base du dispositif de transmission. Tant que le couple transmis au dispositif de transmission par l'arbre d'entrée 2a est tel que la poussée axiale Pac dans la couronne 8 suffit pour comprimer le ressort belleville 34 et maintenir les masselottes 29 dans la position de repos représentée à la figure 3, l'écartement entre le plateau de retenue 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2a, et il tend à être immobilisé par la charge que doit entraîner l'arbre de sortie 2b. Il en résulte que les satellites 11 tendent à se comporter en inverseurs de mouvement, c'est à dire à faire tourner la roue planétaire 9 en sens inverse du sens de rotation de la couronne 8. Mais ceci est empêché par la roue libre 16. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2a. Le module fonctionne donc en réducteur. Si la vitesse de rotation augmente et que le couple reste inchangé, il arrive un instant où la force centrifuge des masselottes 29 produit entre le plateau de retenue 26 et le plateau mobile 27 une force axiale de serrage plus grande que la poussée axiale Pac, et le plateau mobile 27 est poussé vers le plateau 26 pour réaliser la prise directe.

Lorsque l'embrayage 18 est serré, toute la puissance est transmise directement de la couronne 8 liée à l'arbre d'entrée 2a, au porte-satellites 13 lié à l'arbre de sortie 2b. Par conséquent, les dentures du train épicycloïdal 7 ne travaillent plus, c'est à dire qu'elles ne transmettent plus aucune force et elles ne donnent donc naissance à aucune poussée axiale. Ainsi, la poussée axiale due à la force centrifuge peut s'exercer pleinement pour serrer les plateaux 26 et 27 l'un vers l'autre. On comprend alors mieux le processus de passage en prise directe : dès que les disques 19 et 22 commencent à frotter les uns contre les autres et transmettent une partie de la puissance, les dentures sont déchargées d'autant, la poussée axiale Pac diminue d'autant, et la suprématie de la force centrifuge se confirme de plus en plus jusqu'à ce que l'embrayage 18 assure totalement la prise directe.

Il peut alors arriver que la vitesse de rotation de l'arbre de sortie 2b diminue, et/ou que le couple à transmettre augmente, au point que les masselottes 29 n'assurent plus dans l'embrayage 18 une force de serrage suffisante pour transmettre le couple. Dans ce cas, l'embrayage 18 commence à patiner. La vitesse de la roue planétaire 9 diminue jusqu'à s'annuler. La roue libre 16 immobilise la roue planétaire et la force de denture Pac réapparaît pour desserrer l'embrayage, de sorte que le dispositif de transmission fonctionne ensuite en réducteur. Ainsi, chaque fois qu'un changement entre le fonctionnement en réducteur et le fonctionnement en prise directe s'opère, la force axiale Pac varie dans le sens qui stabilise le rapport de transmission nouvellement institué. Ceci est très avantageux d'une part pour éviter les changements de rapport incessants autour de certains points de fonctionnement critiques, et d'autre part pour que les situations de patinage de l'embrayage 18 ne soient que transitoires.

Le ressort belleville 34 a pour fonction de réaliser un frein de sécurité en couplant le moteur 5 avec les roues du véhicule lorsque les deux sont à l'arrêt, et de modifier avantageusement la caractéristique de la force de serrage appliquée à l'embrayage en fonction de la vitesse de l'arbre de sortie 2b, par comparaison avec une force de serrage qui serait purement produite par effet centrifuge.

On va maintenant décrire certaines particularités de l'embrayage multi-disques 18 conforme à la présente invention.

Aux figures 1, 3 et 4, on a représenté l'embrayage multi-disques comme ne comportant que sept disques en tout, mais en pratique ce nombre peut être nettement plus important et atteindre par exemple une quinzaine ou une vingtaine de disques.

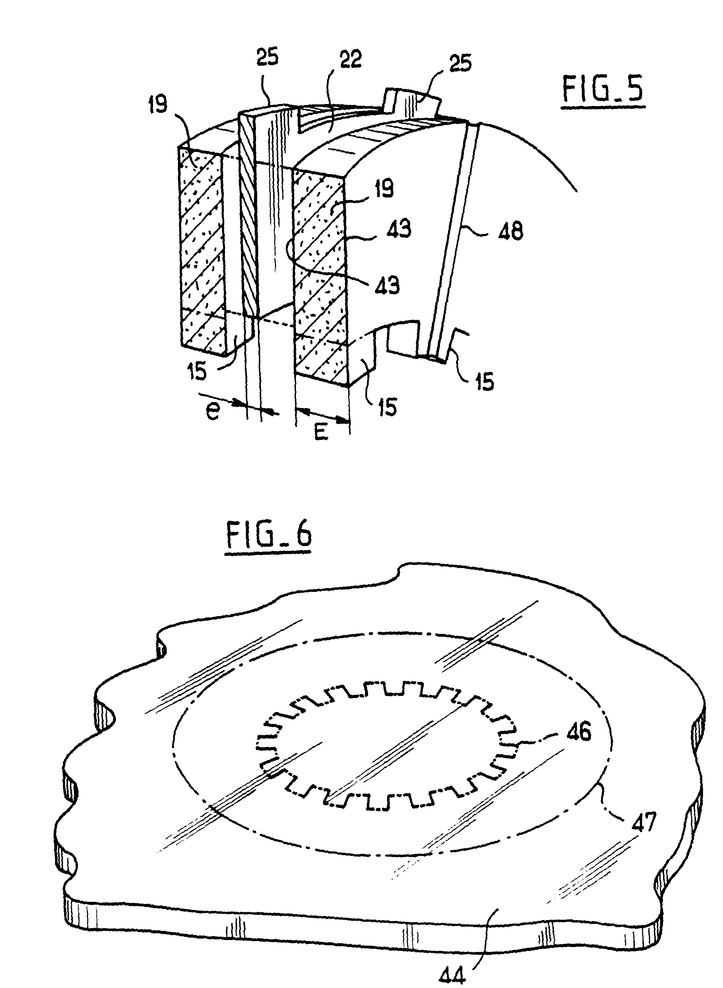

Les disques 22, que l'on appellera ci-après "premiers disques" sont réalisés en acier trempé, conformément à la technique classique des embrayages multi-disques à bain d'huile. Leur épaisseur "e" (figure 5) est par exemple d'environ 1mm.

Par contre, les disques 19 solidaires en rotation de la couronne 8 sont entièrement réalisés en une matière constituée d'une matrice de carbone dans laquelle sont noyées des fibres de carbone, selon la technologie dite "carbone-carbone". En particulier, ces disques ne comportent pas d'âme de renforcement, métallique ou autre. Le matériau carboné précité occupe tout l'espace compris entre les faces de friction opposées 43 d'un disque (figure 5). L'épaisseur "E" des disques en carbone 19, supérieure à celle "e" des disques 22 en acier, est par exemple de 3mm.

Comme illustré par la figure 6, on peut réaliser un tel disque en partant d'une plaque 44 dudit matériau carbone-carbone, ayant une épaisseur uniforme égale à celle voulue pour les disques 19, c'est à dire 3mm dans l'exemple précité, et on découpe la plaque selon deux contours coaxiaux 46 et 47 correspondant l'un au contour radialement intérieur, l'autre au contour radialement extérieur du disque 19 à réaliser. Le contour intérieur 46 définit directement les dents 15 du disque, qui sont ainsi réalisées d'un seul bloc avec le corps du disque définissant les deux faces de friction 43.

Dans l'exemple représenté, il y a un premier disque 22 à chaque extrémité de l'empilement de disques appartenant à l'embrayage multi-disques 18, et le nombre des premiers disques 22 est donc supérieur d'une unité au nombre des seconds disques 19. En choisissant de réaliser en carbone les disques dont le nombre est le moins élevé, on réduit le coût et l'encombrement axial de l'embrayage.

De manière classique, les dents 15 des disques 19 dont la denture est radialement intérieure sont plus nombreuses et ont un pas nettement plus rapproché que les dents 25 des disques dont la denture est extérieure. En effet, pour la transmission d'un même couple, la force périphérique est plus grande le long du bord radialement intérieur, ce qui nécessite de prévoir plus de dents le long d'une périphérie qui est néanmoins plus petite que la périphérie extérieure. Il est préféré selon l'invention que les disques en carbone soit ceux dont les dents sont à l'intérieur, comme représenté. Comme ces disques sont plus épais, l'aire de contact entre chaque dent et le flanc de cannelure correspondant est relativement grande et on peut donc réduire le nombre de dents. En outre les disques à denture intérieure ont des diamètres intérieur et extérieur plus faibles. Ils nécessitent donc moins de matière, et leur fabrication selon le procédé illustré par la figure 6 provoque moins de chutes de matière à l'intérieur du contour 46 et à l'extérieur du contour 47.

Comme le montre la figure 5 on peut former dans chaque face de friction 43 de chaque disque 19 en carbone au moins une rainure radiale 48, de préférence au moins deux rainures radiales diamétralement opposées. Chaque rainure s'étend de l'extrémité libre d'une dent 15 du disque jusqu'au bord périphérique du disque opposé aux dents 15. Ces rainures forment en service, avec la face adjacente du disque en acier 22 voisin, un conduit dans lequel l'huile circule radialement vers l'extérieur par centrifugation.

Les bords des rainures 48 sont incapables d'endommager les disques en acier. Si les rainures étaient faites dans les disques en acier, il pourrait en résulter la nécessité de prévoir ceux-ci plus épais, et le risque que les bords des rainures endommagent la matière carbonée adjacente. Les rainures 48 ont pour fonction de permettre à l'huile de circuler de la région située radialement à l'intérieur des disques à la région située radialement à l'extérieur des disques même lorsque l'embrayage est serré. Mais ces rainures ne sont pas indispensables. Il est actuellement préféré que les surfaces de friction des disques soient entièrement lisses et qu'un passage soit prévu par ailleurs pour permettre à l'huile de circuler comme il vient d'être dit même lorsque l'embrayage est serré. Même s'il est prévu des rainures telles que 48, les disques peuvent être considérés comme sensiblement lisses, si ces rainures restent en nombre assez faible et dégagent d'importantes plages lisses. Il est en effet apparu que dans de telles conditions les rainures 48 ne lubrifient pas de manière sensible le contact entre les disques lorsque l'embrayage est à l'état de fin de patinage ou à l'état d'adhérence sous l'action d'une force de serrage.

Bien entendu, l'invention n'est pas limitée à l'exemple décrit et représenté.

L'invention est applicable aux embrayages multi-disques actionnés par des vérins eux-mêmes pilotés par un circuit logique, qu'il soit hydraulique ou électronique. Par rapport aux exemples décrits, la force de serrage peut être produite autrement qu'avec des masselottes centrifuges. Par exemple un ressort produisant une force de serrage constante est utilisable. En ce qui concerne le procédé, on peut partir d'une plaque un peu plus épaisse que les disques, s'il est prévu d'usiner ensuite les faces de friction.

L'invention est applicable à des freins multi-disques.

## Revendications

1. Dispositif d'accouplement multi-disques à friction, notamment pour transmission automatique destinée à l'automobile, comprenant un premier (20, 26, 27) et un second (8, 21) organe coaxialement rotatifs, un premier groupe de disques (22) réalisés en métal, solidaires en rotation du premier organe (20, 26, 27) et alternant avec des disques (19) d'un second groupe, solidaires en rotation du second organe, et des moyens (29, 34, 17, B2) pour sélectivement comprimer axialement et respectivement relâcher axialement les disques (19, 22), caractérisé en ce que pour chaque disque (19) du second groupe, le corps du disque, comportant les deux faces de friction opposées (43), est réalisé en une même masse de matière carbonnée.

2. Dispositif selon la revendication 1, caractérisé en ce que le carbone des disques (19) du second groupe est renforcé de fibres.

3. Dispositif selon la revendication 2, caractérisé en ce que les fibres sont des fibres de carbone.

4. Dispositif selon l'une des revendications 1 à 3, caractérisé en ce que les disques (22) du premier groupe sont en acier trempé.

5. Dispositif selon l'une des revendications 1 à 4, caractérisé en ce que l'épaisseur (E) des disques (19) du deuxième groupe est plus grande que celle (e) des disques (22) du premier groupe.

6. Dispositif selon la revendication 5, caractérisé en ce que les disques (22) du premier groupe ont une épaisseur (e) d'environ 1mm et les disques (19) du deuxième groupe ont une épaisseur (E) d'environ 3mm.

7. Dispositif selon l'une des revendications 1 à 6, caractérisé en ce que le premier groupe de disques comporte un disque (22) de plus que le second groupe, les deux disques extrêmes de l'empilement appartenant tous deux au premier groupe.

8. Dispositif selon l'une des revendications 1 à 7, caractérisé en ce que le second organe comporte des cannelures axiales (21) et les disques (19) du second groupe comportent des dents (15) engagées de manière coulissante dans les cannelures, et en ce que les dents sont également réalisées à base de carbone.

9. Dispositif selon la revendication 8, caractérisé en ce que pour chaque disque (19) du second groupe, les dents (15) du disque sont réalisées dans ladite masse de matière carbonée.

10. Dispositif selon la revendication 8 ou 9, caractérisé en ce que les dents (15) des disques (19) du second groupe sont orientées radialement vers l'intérieur.

11. Dispositif selon l'une des revendications 1 à 10, caractérisé en ce que les disques (19) du second groupe comportent au moins une rainure radiale (48) dans chaque face de friction.

12. Dispositif selon la revendication 11, caractérisé en ce que les disques (19) du second groupe sont liés en rotation à un organe d'entrée (8) et les disques du premier groupe (22) à un organe de sortie (13).

13. Dispositif selon l'une des revendications 1 à 12, caractérisé en ce que les faces des disques (19, 22) sont sensiblement lisses.

14. Transmission automatique comprenant au moins une combinaison de dentures (7) et au moins un dispositif d'accouplement multi-disques à friction (18) piloté automatiquement entre l'état serré et l'état desserré pour faire fonctionner la combinaison de dentures selon un premier et respectivement un deuxième rapport de transmission, caractérisée en ce que le dispositif d'accouplement multi-disques (18) est conforme à l'une des revendications 1 à 13.

15. Transmission automatique selon la revendication 14, caractérisée en ce que le dispositif d'accouplement est un embrayage, la combinaison de dentures (7) est au moins partiellement déchargée lorsque l'embrayage (18) est serré, et en ce que la transmission comprend des moyens (17, B2) pour transmettre à l'embrayage (18), dans le sens du desserrage, une réaction de denture (P_{AC}) générée dans la combinaison de dentures (7) quand elle est sous charge, des moyens (29, 34) pour serrer l'embrayage (18) sous un effort calibré donnant à l'embrayage une capacité de transmission de couple correspondante, et un moyen (16) du type roue libre pour empêcher la rotation inverse d'un organe de réaction (9) supportant l'une des dentures de la combinaison.

16. Procédé pour réaliser un disque du second groupe d'un dispositif d'accouplement selon l'une des revendications 1 à 13, caractérisé en ce qu'on découpe le disque (19) d'une seule pièce dans une plaque de matériau carboné (44) ayant une épaisseur sensiblement égale à celle souhaitée pour le disque (19) du second groupe.

## Patentansprüche

1. Mehrscheiben-Reibungskupplungsvorrichtung, insbesondere für ein für ein Kraftfahrzeug bestimmtes automatisches Getriebe, mit einem ersten (20, 26, 27) und einem zweiten (8, 21) Organ, die koaxial drehen, mit einer ersten Gruppe von Scheiben (22) aus Metall, die drehfest mit dem ersten Organ (20, 26, 27) und alternierend mit drehfest mit dem zweiten Organ verbundenen zweiten Scheiben (19) angeordnet sind, und mit Mitteln (29, 34, 17, B2) zum selektiven axialen Komprimieren bzw. axialen Lockern der Scheiben (19, 22) **dadurch gekennzeichnet, dass** für jede Scheibe (19) der zweiten Gruppe der die beiden gegenüberliegenden Reibungsflächen (43) aufweisende Scheibenkörper aus einem Stück kohlenstoffhaltigen Materials hergestellt ist.

2. Vorrichtung nach Anspruch 1, dadurch gekennzeichnet, dass der Kohlenstoff der Scheiben (19) der zweiten Gruppe faserverstärkt ist.

3. Vorrichtung nach Anspruch 2, dadurch gekennzeichnet, dass die Fasern Kohlenstofffasern sind.

4. Vorrichtung nach einem der Ansprüche 1 bis 3, dadurch gekennzeichnet, dass die Scheiben (22) der ersten Gruppe aus gehärtetem Stahl sind.

5. Vorrichtung nach einem der Ansprüche 1 bis 4, dadurch gekennzeichnet, dass die Dicke (E) der Scheiben (19) der zweiten Gruppe größer als diejenige (e) der Scheiben (22) der ersten Gruppe ist.

6. Vorrichtung nach Anspruch 5, dadurch gekennzeichnet, dass die Scheiben (22) der ersten Gruppe eine Dicke (e) von ungefähr 1 mm und die Scheiben (19) der zweiten Gruppe eine Dicke (E) von ungefähr 3 mm haben.

7. Vorrichtung nach einem der Ansprüche 1 bis 6, dadurch gekennzeichnet, dass die erste Gruppe der Scheiben eine Scheibe (22) mehr als die zweite Gruppe aufweist, und die beiden äußeren Scheiben des Stapels beide zur ersten Gruppe gehören.

8. Vorrichtung nach einem der Ansprüche 1 bis 7, dadurch gekennzeichnet, dass das zweite Organ axiale Rillen (21) aufweist und die Scheiben (19) der zweiten Gruppe Zähne (15) aufweisen, die verschiebbar in die Rillen eingreifen, und dass die Zähne gleichermaßen auf der Grundlage von Kohlenstoff hergestellt sind.

9. Vorrichtung nach Anspruch 8, dadurch gekennzeichnet, dass für jede Scheibe (19) der zweiten Gruppe die Zähne (15) der Scheibe in dem genannten Stück aus kohlenstoffhaltigem Material gefertigt sind.

10. Vorrichtung nach Anspruch 8 oder 9, dadurch gekennzeichnet, dass die Zähne (15) der Scheiben (19) der zweiten Gruppe radialwärts nach innen gerichtet sind.

11. Vorrichtung nach einem der Ansprüche 1 bis 10, dadurch gekennzeichnet, dass die Scheiben (19) der zweiten Gruppe wenigstens eine radiale Rinne (48) in jeder Reibungsfläche aufweisen.

12. Vorrichtung nach Anspruch 11, dadurch gekennzeichnet, dass die Scheiben (19) der zweiten Gruppe mit einem Antriebsorgan (8) und die Scheiben (22) der ersten Gruppe mit einem Abtriebsorgan (13) drehfest verbunden sind.

13. Vorrichtung nach einem der Ansprüche 1 bis 12, dadurch gekennzeichnet, dass die Flächen der Scheiben (19, 22) im wesentlichen glatt sind.

14. Automatisches Getriebe, das wenigstens eine Verbindung (7) durch Zahnungen und wenigstens eine zwischen dem geklemmten Zustand und dem gelockerten Zustand automatisch gesteuerte Mehrscheiben-Reibungskupplungsvorrichtung (18), um die Zahnungsverbindung entsprechend einem ersten bzw. einem zweiten Übersetzungsverhältnis wirken zu lassen, umfasst, dadurch gekennzeichnet, dass die Mehrscheiben-Kupplungsvorrichtung (18) einem der Ansprüche 1 bis 13 entspricht.

15. Automatisches Getriebe nach Anspruch 14, dadurch gekennzeichnet, dass die Kupplungsvorrichtung eine ausrückbare Kupplung ist, wobei die Zahnungsverbindung (7) wenigstens teilweise entlastet ist, wenn die ausrückbare Kupplung (18) geklemmt ist, und dass das Getriebe Mittel (17, B2) um auf die ausrückbare Kupplung in Lockerungsrichtung eine Gegenkraft der Zahnung (P_{AC}), die in der Zahnungsverbindung (7) wenn sie unter Last steht, erzeugt wird, zu übertragen, Mittel (29, 34), um die ausrückbare Kupplung (18) unter einer kalibrierten Belastung zu klemmen, wodurch der ausrückbaren Kupplung die Fähigkeit zur Übertragung eines entsprechenden Momentes vermittelt wird, und ein Mittel (16) vom Typ eines Freilaufs aufweist, um eine umgekehrte Drehung eines eine der Zahnungen der Verbindung tragenden Gegenkraftmittels (9) zu verhindern.

16. Verfahren zur Herstellung einer Scheibe der zweiten Gruppe einer Kupplungsvorrichtung nach einem der Ansprüche 1 bis 13, dadurch gekennzeichnet, dass die Scheibe (19) in einem einzigen Stück aus einer Platte aus kohlenstoffhaltigem Material (44) mit einer Dicke, die der gewünschten Dicke für die Platte (19) der zweiten Gruppe ungefähr entspricht, ausgestanzt wird.

## Claims

1. Multi-disc friction coupling device, in particular for automatic transmission intended for motor vehicles, comprising first (20, 26, 27) and second (8, 21) coaxially rotatable members, a first group of discs (22) made of metal, integral in rotation with the first member (20, 26, 27) and alternating with the discs (19) of a second group, integral in rotation with the second member, and means (29, 34, 17, B2) for selectively axially compressing and respectively axially releasing the discs (19, 22), characterized in that for each disc (19) of the second group the body of the disc, comprising both opposed friction faces (43), is made from a single piece of carbon-based material.

2. Device according to claim 1, characterized in that the carbon of the discs (19) of the second group is reinforced with fibres.

3. Device according to claim 2, characterized in that the fibres are carbon fibres.

4. Device according one of claims 1 to 3, characterized in that the discs (22) of the first group are made of hardened steel.

5. Device according to one of claims 1 to 4, characterized in that the thickness (E) of the discs (19) of the second group is greater than that (e) of the discs (22) of the first group.

6. Device according to claim 5, characterized in that the discs (22) of the first group have a thickness (e) of about 1 mm and the discs (19) of the second group have a thickness (E) of about 3 mm.

7. Device according to one of claims 1 to 6, characterized in that the first group of discs comprises one disc (22) more than the second group, the two end discs of the stack both belonging to the first group.

8. Device according to one of claims 1 to 7, characterized in that the second member comprises axial grooves (21) and the discs (19) of the second group comprise teeth (15) slidably engaging the grooves, and in that the teeth are also made of carbon-based material.

9. Device according to claim 8, characterized in that for each disc (19) of the second group, the teeth (15) are made in said piece from carbon-based material.

10. Device according to claim 8 or 9, characterized in that the teeth (15) of the discs (19) of the second group are oriented radially inwardly.

11. Device according to one of claims 1 to 10, characterized in that the discs (19) of the second group comprise at least one radial groove (48) in each friction face.

12. Device according to claim 11, characterized in that the discs (19) of the second group are connected for common rotation with an input member (8) and the discs of the first group (22) with an output member (13).

13. Device according to one of claims 1 to 12, characterized in that the faces of the discs (19, 22) are substantially smooth.

14. Automatic transmission comprising at least one combination of teeth (7) and at least one multi-disc friction coupling device (18) automatically controlled between the engaged state and the disengaged state in order to cause the combination of teeth to operate according to a first and respectively to a second transmission ratio, characterized in that the multi-disc coupling device (18) is according to one of claims 1 to 13.

15. Automatic transmission according to claim 14, characterized in that the coupling device is a clutch, the combination of teeth (7) is at least partially off-loaded when the clutch (18) is engaged, and in that the transmission comprises means (17, B2) for transmitting to the clutch (18), in the sense of disengagement, a gearing reaction (P_{AC}) generated in the combination of teeth (7) when it is under load, means (29, 34) for engaging the clutch (18) under a calibrated force giving the clutch a corresponding torque transmission capability, and a means (16) of the free wheel type to prevent reverse rotation of a reaction member (9) supporting one of the sets of teeth of the combination.

16. Method of making a disc of the second group of a coupling device according to one of claims 1 to 13, characterized in that the disc (19) is cut in one piece from a sheet of carbon-based material (44) having a thickness substantially equal to that desired for the disc (19) of the second group.
